# EUROPEAN PATENT APPLICATION

(11) **EP 4 414 692 A1**
(43) Date of publication of application: **14.08.2024**
(21) Application number: 21964189.1
(22) Date of filing: 16.11.2021
(51) Int. Cl.: G01N 21/88, G06T 7/00, G06T 7/20, G06N 3/08

(54) **ARTIFICIAL INTELLIGENCE-BASED MATERIAL DEFECT DETECTION SYSTEM AND METHOD CONSIDERING TYPE AND DISTRIBUTION OF REAL DEFECT IMAGES**

(30) Priority: 15.11.2021 KR 20210156579
(71) Applicant: Lightvision Inc., Seoul 04793 (KR)
(72) Inventor: JEONG, Jin Ha, Yongin-si, Gyeonggi-do 16960 (KR); RA, Moon Soo, Bucheon-si, Gyeonggi-do 14539 (KR); LEE, Hea Yun, Suwon-si, Gyeonggi-do 16517 (KR); LEE, Hyun Ji, Seoul 06074 (KR)
(74) Representative: BCKIP Part mbB
(86) International application number: PCT/KR2021/016761
(87) International publication number: WO 2023/085479

(57) **Abstract**

A handover system for tracking a moving object and a method of providing a parking service in the same are disclosed. A computing device comprises a communication unit which is a communication path with a first sensor for monitoring a first handover area and a second sensor for monitoring a second handover area, and a handover unit configured to obtain a first image from the first sensor, obtain a second image from the second sensor, detect an exit of a moving object from the first handover area through the obtained first image, detect an entrance of a moving object to the second handover area through the obtained second image and discriminate whether or not the moving object entered the second handover area is the same moving object as the moving object exited from the first handover area by using the detected entrance of the moving object and the detected exit of the moving object. Here, the second handover area is matched with the first handover area.

## Description

### TECHNICAL FIELD

The present disclosure relates to an Al-based system and method of detecting a defect of material considering a kind and a distribution of a real defect image.

### BACKGROUND ART

In recent, application of Artificial intelligence in an automatic defect detecting field has been rapidly increased according as an artificial intelligence technique is developed. For example, a class activation mapping (CAM) as a deep learning technique is used for detecting automatically a defect of each of potato and an LED substrate in S. Marino, A. Smolarz, and P. Beauseroy, "Potato defects classification and localization with convolutional neural networks," in Fourteenth International Conference on Quality Control by Artificial Vision, vol. 11472, 2019, pp. 110-117. and H. Lin, B. Li, X. Wang, Y Shu, and S. Niu, "Automated defect inspection of LED chip using deep convolutional neural network," Journal of Intelligent Manufacturing, vol. 30, pp. 2525-2534, 2019. The CAM visualizes observation of an input image and deduction of classified result by an artificial neural network learned by a classifier. In the example, the artificial neural network for classifying defect-free/defect is learned and the CAM detects a location of the defect.

Many defect-free images and defect images are required for learning an artificial neural network for automatically detecting a defect. However, it is difficult to obtain the defect image due to feature of the defect image, e.g., because a defect in a semiconductor occurs in a unit of ppm. Additionally, data imbalance occurs because the defect-free image is relatively easily obtained. Furthermore, information concerning defect-free/defect is a trade secret and thus it is not publicly available. Accordingly, it is difficult to construct dataset.

### SUMMARY

The present disclosure is to provide a method of generating a defect image of material based on artificial intelligence and a system for detecting a defect.

Additionally, the present disclosure is to provide a method of generating a defect image of material based on artificial intelligence for constructing a training dataset by generating many synthetic defect-free images and synthetic defect images from a few defect images and a system for detecting a defect.

Furthermore, the present disclosure is to provide a method of generating a defect image of material based on artificial intelligence for generating a defect-free image corresponding to a defect image to learn an artificial neural network when the defect image is inputted by photographing a synthetic training dataset and a system for detecting a defect.

Moreover, a system for detecting a defect of the present disclosure generates synthetic defect images/synthetic defect-free images with various kinds and uniform distribution considering a kind and a distribution of a real defect image. A model learned by using the synthetic defect images/synthetic defect-free image solves data imbalance according to a kind of a defect image, and thus it achieves consistent performance in various situations.

A system for detecting a defect according to an embodiment of the disclosure includes a training data generating unit configured to generate multiple synthetic defect-free images or synthetic defect images using a defect image; a training unit configured to learn a model for detection of a defect by using the generated synthetic defect-free images or the generated synthetic defect images; and a defect detecting unit configured to detect a defect of an input image using the learned model. Here, the training data generating unit detects a shape of the defect or a shape of a background by analyzing a kind or a distribution of the defect image, and generate different kind, number or resolution of the synthetic defect-free image or the synthetic defect image depending on the detected shape of the defect or the detected shape of the background.

A system for detecting a defect according to another embodiment of the present disclosure includes a training data generating unit configured to generate multiple synthetic defect-free images or synthetic defect images using a defect image; a training unit configured to learn a model for detection of a defect by using the generated synthetic defect-free images or the generated synthetic defect images; and a defect detecting unit configured to detect a defect of an input image using the learned model. Here, the training data generating unit determines a kind, a number or a resolution of a synthetic defect-free image or a synthetic defect image to be generated by analyzing a kind or a distribution of the defect image through an artificial intelligence, but determines differently a kind, a number or a resolution of the synthetic defect-free image or the synthetic defect image to be generated according to user's request.

A method of detecting a defect according to an embodiment of the present disclosure includes generating multiple synthetic defect-free images or synthetic defect images using a defect image; learning a model for detection of a defect by using the generated synthetic defect-free images or the generated synthetic defect images; and detecting a defect of an input image using the learned model. Here, a shape of a defect or a shape of a background is detected by analyzing a kind or a distribution of the defect image, and a kind, a number or a resolution of the synthetic defect-free image or the synthetic defect image is differently generated according to the detected shape of the defect or the detected shape of the background.

The present disclosure provides an Al-based system and a method of detecting a defect of material considering a kind and a distribution of a real defect image. The system generates a defect-free image corresponding accurately to inputted defect image, thereby detecting efficiently unexpected defect area.

Additionally, the system of the present disclosure corresponds to an unsupervised learning for performing a learning without annotations, thereby decreasing in manpower occurred in a process of generating the annotations.

Furthermore, the system of the present disclosure generates many synthetic defect-free images/synthetic defect images from a few defect images, thereby solving data imbalance and problems occurred due to few data.

Moreover, the system of the present disclosure generates synthetic defect images/synthetic defect-free images with various kinds and uniform distribution considering a kind and a distribution of a real defect image, and thus a model learned with the synthetic defect images and the synthetic defect-free images produces consistent performance in various situations.

### BRIEF DESCRIPTION OF DRAWINGS

Example embodiments of the present disclosure will become more apparent by describing in detail example embodiments of the present disclosure with reference to the accompanying drawings, in which:
FIG. 1 is a block diagram illustrating a system for detecting a defect according to an embodiment of the present disclosure;
FIG. 2 is a view illustrating an example of a kind and a distribution of a defect image;
FIG. 3 is a view illustrating a process of generating a synthetic defect-free image using a defect image according to an embodiment of the present disclosure;
FIG. 4 is a view illustrating a process of generating a synthetic defect-free image using a defect-free image according to an embodiment of the present disclosure;
FIG. 5 is a view illustrating a process of generating a synthetic defect image using a defect image according to an embodiment of the present disclosure;
FIG. 6 is a view illustrating a process of converting low-resolution defect image generated randomly into high-resolution defect image;
FIG. 7 is a view illustrating a process of detecting a defect area according to an embodiment of the present disclosure;
FIG. 8 is a view illustrating a defect image generated by changing a kind and a location of a defect in an original defect image according to another embodiment of the present disclosure;
FIG. 9 is a flow chart illustrating a process of learning a model according to an embodiment of the present disclosure; and
FIG. 10 is a flow chart illustrating a process of detecting a defect according to an embodiment of the present disclosure.

### DETAILED DESCRIPTION

In the present specification, an expression used in the singular encompasses the expression of the plural, unless it has a clearly different meaning in the context. In the present specification, terms such as "comprising" or "including," etc., should not be interpreted as meaning that all of the elements or operations are necessarily included. That is, some of the elements or operations may not be included, while other additional elements or operations may be further included. Also, terms such as "unit," "module," etc., as used in the present specification may refer to a part for processing at least one function or action and may be implemented as hardware, software, or a combination of hardware and software.

Hereinafter, embodiments of the disclosure will be described in detail with reference to accompanying drawings.

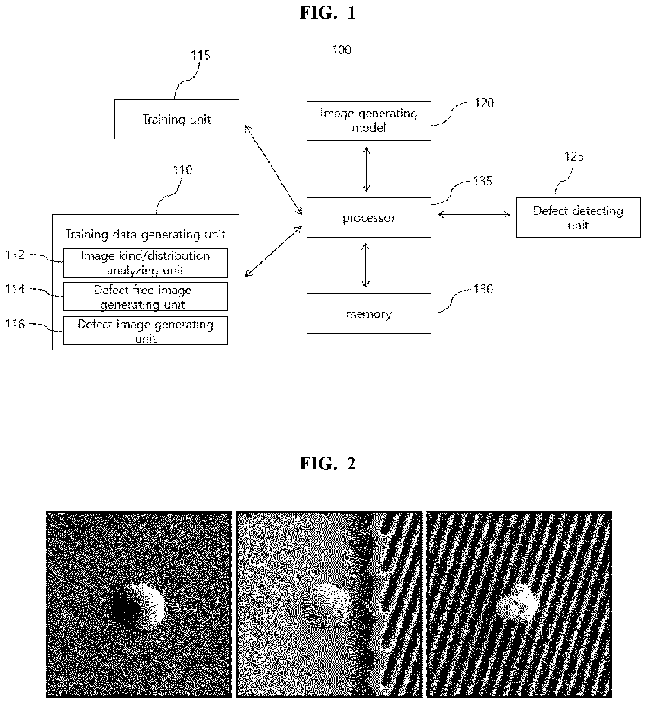

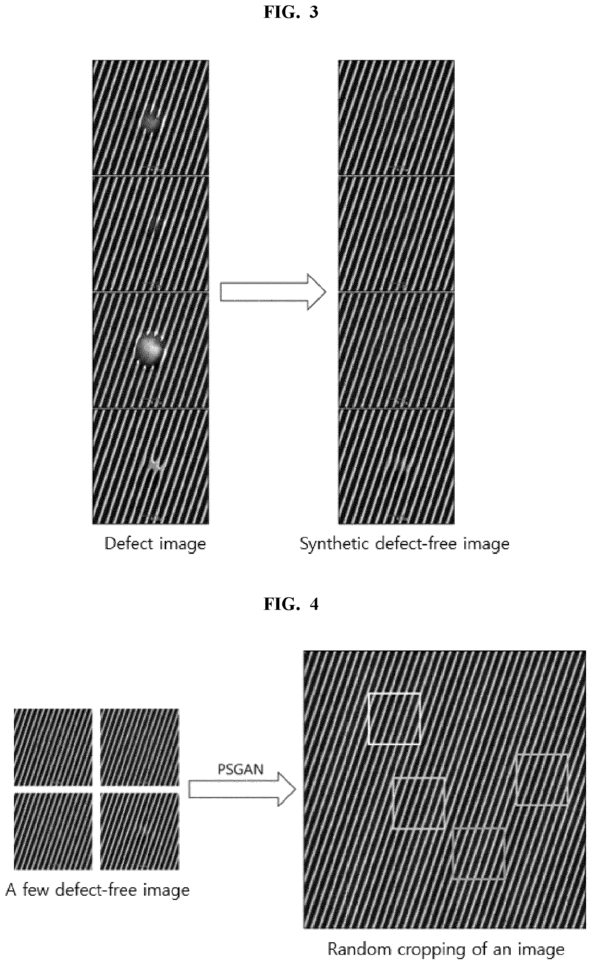

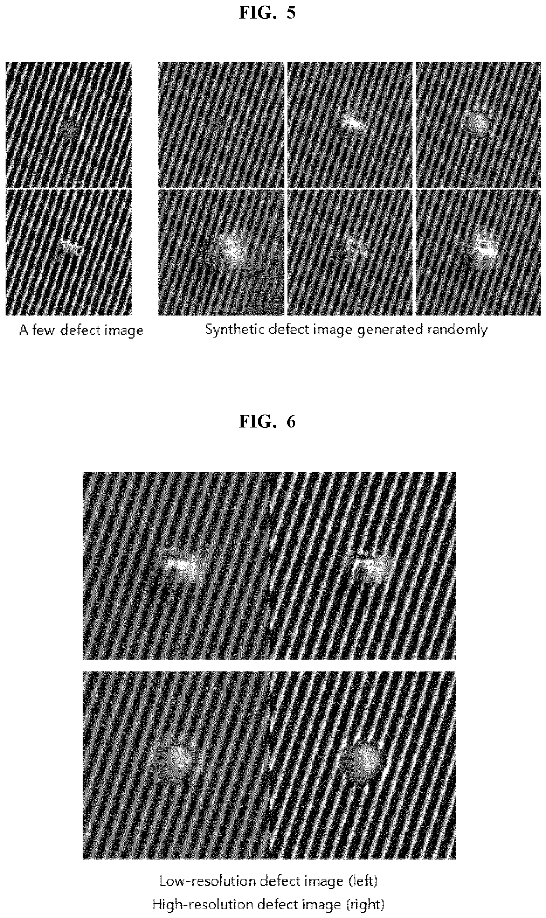

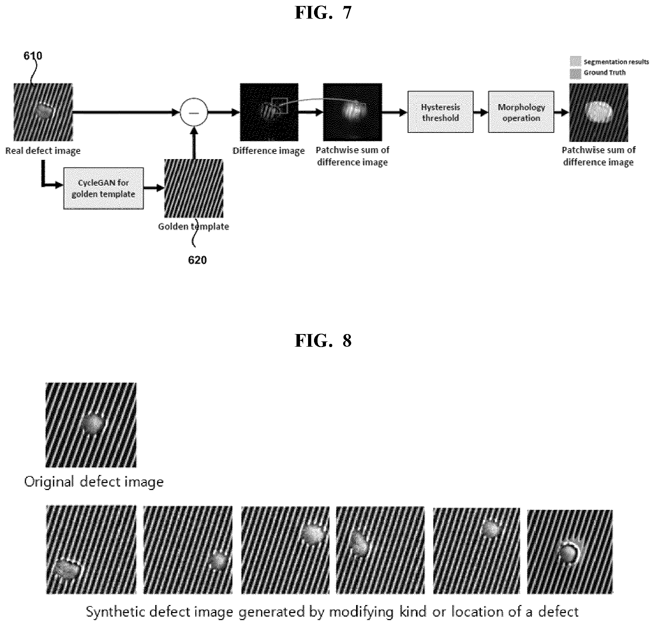

FIG. 1 is a block diagram illustrating a system for detecting a defect according to an embodiment of the present disclosure, FIG. 2 is a view illustrating an example of a kind and a distribution of a defect image, and FIG. 3 is a view illustrating a process of generating a synthetic defect-free image using a defect image according to an embodiment of the present disclosure. FIG. 4 is a view illustrating a process of generating a synthetic defect-free image using a defect-free image according to an embodiment of the present disclosure, FIG. 5 is a view illustrating a process of generating a synthetic defect image using a defect image according to an embodiment of the present disclosure, and FIG. 6 is a view illustrating a process of converting low-resolution defect image generated randomly into high-resolution defect image. FIG. 7 is a view illustrating a process of detecting a defect area according to an embodiment of the present disclosure, and FIG. 8 is a view illustrating a defect image generated by changing a kind and a location of a defect in an original defect image according to another embodiment of the present disclosure.

In FIG. 1, a system 100 for detecting a defect of the present embodiment may include a training data generating unit 110, a training unit 115, an image generating model 120, a defect detecting unit 125, a memory 130 and a processor 135.

The training data generating unit 110 may analyze a kind and a distribution of a few defect images and generate many synthetic defect images or multiple synthetic defect-free images based on the analyzed result.

The training data generating unit 110 may include an image kind/distribution analyzing unit 112, a defect-free image generating unit 114 and a defect image generating unit 116.

The image kind/distribution analyzing unit 112 may determine a kind, a number or a resolution, etc. of required synthetic defect image or synthetic defect-free image by analyzing a kind and a distribution of inputted defect image.

For example, it is assumed that a defect image as an input image is inputted as shown in FIG. 2. The image kind/distribution analyzing unit 112 may analyze the inputted defect image where two kinds of defects and three kinds of backgrounds exist by analyzing a shape of the defect and a shape of the background. The image kind/distribution analyzing unit 112 may use a clustering after extracting a Haar-like feature and a hand-crafted feature such as histogram of oriented gradient from the inputted defect image, to analyze the shape of the defect and the shape of the background. However, an algorithm of analyzing the shape of the defect and the shape of the background is not limited as a method using the hand-crafted feature and the clustering.

The image kind/distribution analyzing unit 112 may analyze the shape of defect and the shape of background in one input image or analyze generally a shape of defect and a shape of background in plural input images. Here, the input image may be a real image not a synthetic image. Additionally, the input image includes a real image which is determined as a defect image by using a synthetic defect-free image or a synthetic defect image.

The defect-free image generating unit 114 may generate the synthetic defect-free image using inputted defect image, a number of the synthetic defect-free image being determined by the image kind/distribution analyzing unit 112. Here, the defect-free generating unit 114 may generate different number of synthetic defect-free image based on the analyzed shape of defect, generate different number of synthetic defect-free image based on the analyzed shape of background or generate different number of synthetic defect-free image based on the analyzed shape of defect and the analyzed shape of background.

For example, the defect-free image generating unit 114 may generate the synthetic defect-free image through a patch match technique after removing a defect area from the defect image.

This will be described in more detail.

For example, it is assumed that defect images are inputted as shown in FIG. 3. The defect-free image generating unit 114 may generate synthetic defect-free images by removing a defect area from the inputted defect images, respectively.

For example, the defect-free image generating unit 114 may generate a defect-free image based on a defect image by using the patch match technique. Particularly, the defect-free image generating unit 114 may remove a defect area from the defect image and recover the defect area using surrounding information of the defect area to generate the defect-free image. As shown in FIG. 3, the defect image does not include the same defect area but may include various shapes of defect.

Accordingly, the defect-free image generating unit 114 may generate the defect-free image after removing the defect area by applying different image technique depending on a pattern of the defect.

For another example, the defect-free image generating unit 114 may generate multiple synthetic defect-free images by using inputted defect-free image.

In another embodiment, the defect-free image generating unit 114 may generate a synthetic defect-free image by using both of the defect image and the defect-free image. For example, the defect-free image generating unit 114 may remove a defect area from the defect image and then generate the synthetic defect-free image by replacing the removed defect area with an area corresponding to the removed defect area of the defect-free image.

In still another embodiment, the defect-free image generating unit 114 may generate the synthetic defect-free image using peripheral information of the defect area in the defect image or area information of the defect-free image according to status of the defect area. For example, the defect-free image generating unit 114 may generate a synthetic defect-free image by replacing the removed defect area with an area of the defect-free image when a size of the defect area is great or a peripheral area of the defect area is also damaged, and generate the synthetic defect-free image using the peripheral information of the defect area when a size of the defect area is small.

This will be described in detail with reference to accompanying drawing FIG. 4.

For example, the defect-free image generating unit 114 may generate a defect-free image having a resolution more than a reference resolution and then generate multiple synthetic defect-free images by cropping randomly the generated defect-free image.

For example, the defect-free image generating unit 114 may generate a defect-free image with a resolution more than the reference resolution by using a PSGAN and then generate the synthetic defect-free images by cropping randomly the generated defect-free image as shown in FIG. 4.

In another example, the defect-free image generating unit 114 may enlarge the synthetic defect-free image generated from the defect image and then generate plural defect-free images by cropping randomly the generated synthetic defect-free image.

Briefly, the defect-free image generating unit 114 may generate multiple synthetic defect-free images by using a few defect images.

The defect image generating unit 116 may generate multiple synthetic defect images using a few defect images.

For example, it is assumed that the defect image is inputted as shown in FIG. 5. The defect image generating unit 116 may generate multiple synthetic defect images using a DCGAN. Here, the DCGAN may randomly generate an image from a latent variable. Since a result of the DCGAN is limited as a resolution (64 x 64), the defect image generating unit 116 may generate super-resolution defect image using a CycleGAN, which is an artificial neural network for performing super-resolution function, to generate the defect image with higher resolution. The CycleGAN is an artificial neural network for performing unpaired image-to-image translation and may obtain the artificial neural network for performing the super-resolution function when one domain is learned with low-resolution image and another domain is learned with high-resolution image as shown in FIG. 6.

That is, the defect image generating unit 116 may convert inputted low-resolution defect image to high-resolution defect image using the DCGAN and the CycleGAN and then generate multiple synthetic defect images through a random image converting process. Of course, an algorithm of generating the synthetic defect image is not limited as the DCGAN and the CycleGAN.

In FIG. 5, a location of a defect in an input image (defect image) and a location of a defect in the generated synthetic defect image are the same or similar. However, the location of the defect in the synthetic defect image may differ from that of the defect in the input image as shown in FIG. 8. Furthermore, a size or a shape of the defect in the synthetic defect image may differ from that of the defect in the input image.

For example, if it is possible that contaminant is stained on an edge area of a substrate in a deposition process of a semiconductor process, the defect image generating unit 116 may generate multiple synthetic defect images where contaminant is stained on a central part of an edge area of another side of the substrate or an area not the central part of the edge area of another side, etc. by using an input image where contaminant is stained on a central part of an edge area of one side of the substrate. In this case, a premise that the contaminant is stained on an edge while the process is performed may be preset.

For another example, if impact applied to the substrate while the process is performed and a size or a range of a crack by the impact are preset, the defect image generating unit 116 may generate multiple defect images with different depth, length or location of a crack from an input image about cracked substrate.

That is, the defect image generating unit 116 may generate the synthetic defect images with the same location, shape or size as a defect of the input image and generate the synthetic defect images with different location, shape or size from the defect of the input image.

Additionally, the defect image generating unit 116 may generate a defect image having contaminant different from the input image when the defect is contaminant. In this case, a shape or a size, etc. of the contaminant strained on the substrate may differ depending on the contaminant.

The synthetic defect images are generated based on one defect in above description, but synthetic defect images may be generated by combining different shapes of defects. For example, synthetic defect images where contaminant or crack is formed at various locations may be generated when a defect image having contaminant and a defect image with crack are inputted.

In another embodiment, the defect image generating unit 116 may generate synthetic defect images by using the defect image and a defect-free image. For example, the defect image generating unit 116 may extract a defect from the defect image and generate various synthetic defect images by marking the extracted defect at various locations of the defect-free image.

Shortly, the training data generating unit 110 may generate multiple synthetic training datasets for learning of a model by using a few defect images. Moreover, the synthetic training datasets may be at least one of the synthetic defect-free images and the synthetic defect images.

On the other hand, the training data generating unit 110 may operate selectively the defect-free image generating unit 114 and the defect image generating unit 116 or operate both of the defect-free image generating unit 114 and the defect image generating unit 116 according to the shape of the defect or the shape of the background of the defect image or user's request. For example, the training data generating unit 110 may generate the synthetic defect-free image or the synthetic defect image by a number determined by an artificial intelligence or random number irrespective of the determined number.

The model may be learned by using the training dataset generated by the training data generating unit 110.

The training unit 115 may learn an image generating model 120 by using at least one of the synthetic defect-free images and the synthetic defect images.

The training unit 115 may learn a model using at least one of the synthetic defect-free images and the synthetic defect images, and thus the image generating model 120 may be learned to generate the defect-free image using the defect image.

The image generating model 120 may be learned by using the training dataset (at least one of the synthetic defect-free images and the synthetic defect images) through the training unit 115 and then generate a comparison image (defect-free image or defect image) corresponding to an input image in a process of detecting the defect.

For example, the image generating model 120 is learned in advance by using the synthetic defect-free images and the synthetic defect images, and thus it may generate a defect-free image corresponding to inputted defect image.

The defect detecting unit 125 detects a defect by using the input image and the comparison image.

For example, the comparison image may be a synthetic defect-free image corresponding to a defect image when the input image is the defect image. Accordingly, the defect detecting unit 125 may detect a defect area by obtaining a difference image of the input image and the comparison image.

A process of detecting the defect area will be described in more detail with reference to accompanying drawing FIG. 7.

For example, the learned image generating model 120 may generate a synthetic defect-free image, e.g., 620 in FIG. 7 when the input image is a defect image 610. The defect detecting unit 125 may obtain a difference image of the defect image 610 and the synthetic defect-free image 620 and detect the defect area through a Hysteresis threshold and a morphology operation based on the obtained difference image.

The image generating model 120 may generate proper number of synthetic defect-free image considering the shape of defect or the shape of background of the defect image 610. For example, the image generating model 120 may generate 10000 synthetic defect-free images having the same defect as the defect image 610 or a defect similar to the defect of the defect image 610 and various backgrounds and 5000 synthetic defect-free images with the same background as the defect image 610 or a background similar to a background of the defect image 610 and various defects. For another example, the image generating model 120 may generate 10000 synthetic defect-free images when the defect is A defect and generate 3000 synthetic defect-free images when the defect is B defect. That is, the image generating model 120 may generate different number of synthetic defect-free images depending on a shape, a kind or a number, etc. of the defect of the defect image 610 and generate different number of synthetic defect-free images according to a shape, a kind, etc. of the background of the defect image 610.

The memory 130 stores commands (program codes) needed for performing the method of detecting the defect of the present disclosure.

The processor 135 controls elements (for example, the training data generating unit 110, the training unit 115, the image generating model 120, the defect detecting unit 125, the memory 130, etc.) of the system 100 of detecting the defect.

An image about the defect image detected by the defect detecting unit 125 or at least one of the synthetic defect-free images and the synthetic defect images generated by the image generating model 120 may be reused for learning the image generating model 120.

In another embodiment, the learned image generating model 120 may generate the synthetic defect-free images and the synthetic defect images when the input image is the defect image. In this case, the defect area may be detected by comparing the defect image with the synthetic defect-free image, and a kind, a pattern, etc. of the defect may be detected by comparing the defect image with the synthetic defect image.

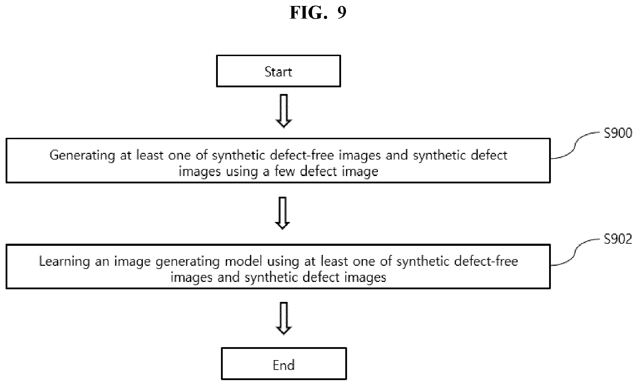

FIG. 9 is a flow chart illustrating a process of learning a model according to an embodiment of the present disclosure.

In a step of S900, the system 100 for detecting the defect generates at least one of synthetic defect-free images and synthetic defect images using a few defect images.

In an embodiment, the system 100 may generate multiple synthetic defect-free images using a few defect images.

For another example, the system 100 may generate multiple synthetic defect images using a few defect images.

In still another example, the system 100 may generate multiple defect-free images using a few defect-free images.

In still another example, the system 100 may generate the synthetic defect-free images and the synthetic defect images using a few defect images.

The system 100 may generate a training dataset for learning of the image generating model 120 using a few input images. Any further description concerning this process will be omitted because the process is the same as in FIG. 1 to FIG. 5.

In a step of S902, the system 100 learns the image generating model 120 by using at least one of the synthetic defect-free images and the synthetic defect images.

The image generating model 120 is a model of generating an image using an artificial intelligence and may generate a comparison image corresponding to the input image.

For example, the image generating model 120 may generate a defect-free image corresponding to a defect image when the input image is the defect image.

The image generating model 120 may be learned in advance by using a training dataset including synthetic defect images and synthetic defect-free images. A learning process of an artificial intelligence model is well known in the art, and thus any further description concerning the learning will be omitted.

It is difficult to obtain adequate training dataset for learning of the artificial intelligence model. As a result, a real model is not adequately learned, and so it is difficult to apply the real model.

The system of the present disclosure may generate respectively the synthetic defect-free images and the synthetic defect images needed for learning of a model using a few defect images and learn the model using the generated images.

Accuracy of the model may increase through the learning of the model using many training datasets.

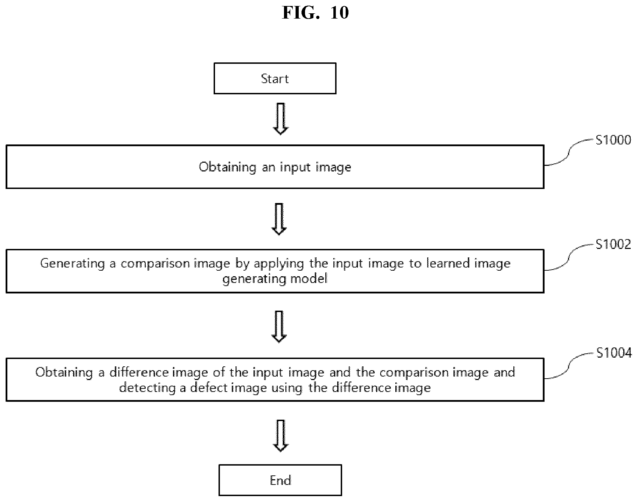

A method of detecting a real defect using the model of which the learning is completed will be described in detail with reference to accompanying drawing FIG. 10.

FIG. 10 is a flow chart illustrating a process of detecting a defect according to an embodiment of the present disclosure. It is assumed that the image generating model 120 is learned in advance by using the training dataset as described in FIG. 10.

In a step of S 1000, the system 100 of detecting a defect obtains an input image.

In a step of S 1002, the system 100 generates a comparison image by applying the input image to the learned image generating model 120.

For example, the comparison image may be a defect-free image generated by removing a defect area from a defect image when the input image is the defect image.

The learned image generating model 120 may generate a synthetic defect-free image formed by removing the defect area from the defect image which is the input image when the input image is applied to the learned image generating model 120 and output the generated synthetic defect-free image as the comparison image.

In a step of S 1004, the system 100 obtains a difference image of the input image and the comparison image and detects the defect area using the difference image.

For example, the system 100 may set the defect image or the defect-free image as the comparison image or set both of the defect image and the defect-free image as the comparison image.

The system 100 may obtain a difference image of the input image and the defect image set as the comparison image and detect a defect area using the difference image.

For another example, the system 100 may obtain a difference image of the input image and the defect-free image set as the comparison image and detect a defect area using the difference image.

Of course, the system 100 may set both of the defect image and the defect-free image as the comparison image according to a situation and determine a defect through comparison with the input image.

The system 100 may use the comparison image to the learning of the model in FIG. 7.

As described above, the system 100 of the present embodiment may generate multiple synthetic training datasets using a few input images (defect image, defect-free image), increase accuracy of the model by learning the model using the generated synthetic training datasets and enhance a defect detecting function by using the learned model to the detection of the defect.

On the other hand, the system 100 generates the synthetic defect images and the synthetic defect-free images and uses the generated synthetic defect images/synthetic defect-free images as the training dataset because the training dataset is insufficient in above description. However, the system 100 may reduce a number of the generated synthetic defect images/synthetic defect-free images to be used for the learning if many real defect images and real defect-free images are secured through a repetitive defect detecting process.

Accordingly, the system 100 may check a number of a real defect image/real defect-free image, generate properly synthetic defect images/synthetic defect-free images according to the checked number and use the generated synthetic defect images/synthetic defect-free images to the learning. For example, the system 100 may generate 20000 synthetic defect images/synthetic defect-free images to be used for the learning when the number of the real defect images/real defect-free images is less than 1000 and generate 15000 synthetic defect images/synthetic defect-free images if 5000 real defect images/real defect-free images are secured through the repetitive defect detecting process.

That is, the artificial intelligence may detect the defect by learning the model using the generated synthetic defect images/synthetic defect-free images and generate the synthetic defect images/synthetic defect-free images to be used for the learning considering a number of secured real defect images/real defect-free images. As a result, a number of the synthetic defect images/synthetic defect-free images reduces and the real defect images/real defect-free images are more used according as the process of detecting the defect is repeatedly performed, thereby enhancing accuracy of the image generating model. Here, an increase rate of the real defect images/real defect-free images may be identical to a reduction rate of the synthetic defect images/synthetic defect-free images, but it is effective that the increase rate is different from the reduction rate.

Components in the embodiments described above can be easily understood from the perspective of processes. That is, each component can also be understood as an individual process. Likewise, processes in the embodiments described above can be easily understood from the perspective of components.

Also, the technical features described above can be implemented in the form of program instructions that may be performed using various computer means and can be recorded in a computer-readable medium. Such a computer-readable medium can include program instructions, data files, data structures, etc., alone or in combination. The program instructions recorded on the medium can be designed and configured specifically for the present invention or can be a type of medium known to and used by the skilled person in the field of computer software. Examples of a computer-readable medium may include magnetic media such as hard disks, floppy disks, magnetic tapes, etc., optical media such as CD-ROM's, DVD's, etc., magneto-optical media such as floptical disks, etc., and hardware devices such as ROM, RAM, flash memory, etc. Examples of the program of instructions may include not only machine language codes produced by a compiler but also high-level language codes that can be executed by a computer through the use of an interpreter, etc. The hardware mentioned above can be made to operate as one or more software modules that perform the actions of the embodiments of the invention, and vice versa.

The embodiments of the invention described above are disclosed only for illustrative purposes. A person having ordinary skill in the art would be able to make various modifications, alterations, and additions without departing from the spirit and scope of the invention, but it is to be appreciated that such modifications, alterations, and additions are encompassed by the scope of claims set forth below.

## Claims

1. A system for detecting a defect comprising:
a training data generating unit configured to generate multiple synthetic defect-free images or synthetic defect images using a defect image;
a training unit configured to learn a model for detection of a defect by using the generated synthetic defect-free images or the generated synthetic defect images; and
a defect detecting unit configured to detect a defect of an input image using the learned model,
wherein the training data generating unit detects a shape of the defect or a shape of a background by analyzing a kind or a distribution of the defect image, and generate different kind, number or resolution of the synthetic defect-free image or the synthetic defect image depending on the detected shape of the defect or the detected shape of the background.

2. The system of claim 1, wherein the training data generating unit extracts a Haar-like feature or a hand-crafted feature from the defect image and detects the shape of the defect or the shape of the background using clustering based on the extracted feature.

3. The system of claim 1, wherein the training data generating unit includes:
an image kind/distribution analyzing unit configured to detect the shape of the defect or the shape of the background by analyzing the kind and the distribution of the defect image;
a defect-free image generating unit configured to generate the synthetic defect-free image according to the detected shape of the defect or the detected shape of the background; and
a defect image generating unit configured to generate the synthetic defect image depending on the detected shape of the defect or the detected shape of the background.

4. The system of claim 3, wherein the defect-free image generating unit or the defect image generating unit generates set kind, number or resolution of synthetic defect-free image of synthetic defect image irrespective of kind, number or resolution determined through an artificial intelligence by the image kind/distribution analyzing unit when a user sets a kind, a number or a resolution of the synthetic defect-free image or the synthetic defect image.

5. The system of claim 3, wherein the defect-free image generating unit generates the synthetic defect-free image by removing a defect area from the defect area and then replacing the removed defect area with proper background.

6. The system of claim 3, wherein the defect image generating unit generates multiple synthetic defect images by modifying a defect area in the defect image or generates multiple synthetic defect images by converting a resolution of the defect image into a reference resolution,
and wherein at least one of a location, a size or a shape of a defect of the synthetic defect image differs from a location, a size or a shape of a defect of the defect image.

7. The system of claim 1, wherein the defect detecting unit generates a comparison image which is an image formed by removing a defect from the input image by using the model, and detects the defect by comparing the generated comparison image with the input image.

8. A system for detecting a defect comprising:
a training data generating unit configured to generate multiple synthetic defect-free images or synthetic defect images using a defect image;
a training unit configured to learn a model for detection of a defect by using the generated synthetic defect-free images or the generated synthetic defect images; and
a defect detecting unit configured to detect a defect of an input image using the learned model,
wherein the training data generating unit determines a kind, a number or a resolution of a synthetic defect-free image or a synthetic defect image to be generated by analyzing a kind or a distribution of the defect image through an artificial intelligence, but determines differently a kind, a number or a resolution of the synthetic defect-free image or the synthetic defect image to be generated according to user's request.

9. The system of claim 8, wherein the training data generating unit detects a shape of a defect or a shape of a background by analyzing the kind or the distribution of the defect image and generates different kind, number or resolution of the synthetic defect-free image or the synthetic defect image depending on the detected shape of the defect or the detected shape of the background.

10. The system of claim 8, wherein the defect-free image generating unit generates the synthetic defect-free image by removing a defect area from the defect area and then replacing the removed defect area with proper background.

11. The system of claim 8, wherein the defect image generating unit generates multiple synthetic defect images by modifying a defect area in the defect image or generates multiple synthetic defect images by converting a resolution of the defect image into a reference resolution,
and wherein at least one of a location, a size or a shape of a defect of the synthetic defect image differs from a location, a size or a shape of a defect of the defect image.

12. A method of detecting a defect, the method comprising:
generating multiple synthetic defect-free images or synthetic defect images using a defect image;
learning a model for detection of a defect by using the generated synthetic defect-free images or the generated synthetic defect images; and
detecting a defect of an input image using the learned model,
wherein a shape of a defect or a shape of a background is detected by analyzing a kind or a distribution of the defect image, and a kind, a number or a resolution of the synthetic defect-free image or the synthetic defect image is differently generated according to the detected shape of the defect or the detected shape of the background.

13. The method of claim 12, wherein the shape of the defect or the shape of the background is detected by extracting a Haar-like feature or a hand-crafted feature from the defect image and using a clustering based on the extracted feature.
